# FASCICULE DE BREVET EUROPEEN

(11) **EP 1 698 979 B1**
(45) Date de publication et mention de la délivrance du brevet: **31.12.2014**
(21) Numéro de dépôt: 06290325.7
(22) Date de dépôt: 28.02.2006
(51) Int. Cl.: G06F 13/42

(54) **Dispositif de connexion permettant de connecter une carte principale à une carte mémoire du type à deux séries de modules mémoire**
Gerät zur Verbindung eines Mainboards zu einer Speicherkarte mit zwei Serien von Speichermodulen
Connection device for connecting a main board to a memory card with two series of memory modules

(30) Priorité: 04.03.2005 FR 0502200
(43) Date de publication de la demande: 06.09.2006
(73) Titulaire: BULL SAS, 78340 Les Clayes sous Bois (FR)
(72) Inventeur: Coutancier, Lionel, 28210 Croisilles (FR); Marquina, Elodie, 75013 Paris (FR); Pairault, Jean-Jacques, 92100 Boulogne Billancourt (FR)
(74) Mandataire: Santarelli

(56) Documents cités:
- WO-A1-2005/008464
- US-A1- 2004 111 546
- US-A1- 2004 123 016
- US-B1- 6 658 509

## Description

La présente invention est relative au domaine de la connexion des cartes mémoires. L'invention concerne plus particulièrement un dispositif de connexion permettant de relier une carte principale à une carte mémoire du type à deux séries de modules mémoire. On comprendra dans ce qui suit par carte principale toute carte comprenant au moins un processeur et destinée à être reliée une ou plusieurs autres cartes (cartes secondaires) ou bien à des mémoires ; il peut s'agir par exemple d'une carte mère.

Il est connu dans l'état de la technique d'utiliser des modules mémoire de type DIMM (Dual Inline Memory Module) dans des équipements informatiques, ces modules mémoire se présentant généralement sous la forme de barrettes mémoire 64 bits, équipées de 84 connecteurs de chaque côté, soit 168 au total. Une topologie de bus en guirlande ou "daisy chain" est souvent utilisée pour établir la connexion entre les modules mémoire, notamment entre modules de type FBD (Fully Buffered Dimm ;JEDEC JC-45.4). L'expression "daisy chain" sert à désigner un mode de liaison entre modules ou entre machines qui utilise une seule ligne logique pour relier les modules les uns aux autres ; le bus est terminé à chaque extrémité par un bouchon (ou terminateur) et un seul module peut émettre à la fois.

A titre d'illustration, le brevet US 6,658,509 décrit une méthode et un appareil pour un système mémoire ayant une architecture de bus mémoire en anneau.

Les modules FBD se connectent en « daisy chain » sur un canal FB-DIMM. Il est possible de mettre jusqu'à 8 modules DIMM sur un canal. Par ailleurs, il est intéressant d'utiliser les canaux par paires pour plusieurs raisons parmi lesquelles :
- augmenter la capacité mémoire accessible, de sorte qu'on accède tantôt à un canal tantôt à l'autre en fonction de la zone mémoire visée, et l'on peut ainsi dépasser 8 barrettes ; bien qu'il n'y ait pas dans ce cas d'impératif catégorique dans ce sens, des considérations de performance ou de disponibilité favorisent les configurations où les barrettes sont réparties équitablement entre les 2 canaux ;
- augmenter le débit mémoire et pouvoir lancer un accès mémoire sur un canal pendant que l'on en fait un autre sur l'autre canal ; dans ce cas on aura en général le même nombre de barrettes sur chaque canal de façon à équilibrer la charge entre les 2 canaux et pour en tirer ainsi la meilleure performance ; une utilisation classique de cette disposition est l'entrelacement mémoire qui permet de lancer, en séquence rapprochée, des accès mémoire à des adresses successives; les adresses paires sont alors servies par un canal et les adresses impaires par l'autre (dans ce cas, les 2 canaux sont nécessairement mis en relation avec un nombre identique de barrettes puisque cela n'aurait pas de sens de n'avoir que les adresses paires (ou impaires) dans une zone donnée de mémoire) ;
- augmenter la largeur (nombre de bits) du mot mémoire accessible en une seule opération à partir des barrettes FB-DIMMS (les 2 canaux, utilisés simultanément donnent alors un mot 2 fois plus large) ; dans ce cas, les 2 canaux devront nécessairement être mis en relation avec un nombre identique de barrettes, sinon une partie de la mémoire serait constituée de mots mémoire incomplets.

On voit ainsi que très souvent, dans le cas de deux canaux, ceux-ci seront constitués avec le même nombre de barrettes mémoire et que la constitution de la configuration mémoire se fera par accroissement progressif et simultané des deux canaux. Cependant, la prise en compte de cette contrainte supplémentaire pose un certain nombre de difficultés. En effet, quelque soit le nombre de barrettes mémoires prévues au maximum et finalement installées sur chaque canal, les problèmes techniques suivants se posent dans un boîtier informatique :
- accessibilité des mémoires ; les FB-DIMMs sont « hot plug » (pouvant être branchées ou déconnectées sans éteindre le reste du système), il est possible d'ajouter des barrettes mémoires en commençant par l'emplacement (slot) 1 jusqu'à l'emplacement 8 ; de la même façon, il est possible de les retirer en commençant par la dernière de la « daisy chain » ;
- optimisation de la surface de carte CPU : avec un connecteur de 155 mm de long et un pas de 10,5mm (0,4'), les mémoires sont assez encombrantes, 16 modules FB-DIMM représentant par exemple une surface d'implantation de 160x180mm (sur une rangée) ou 320x90 (sur deux rangées) ;
- difficulté d'utiliser au mieux le volume à l'intérieur du boîtier de 2 ou 3U (1U = 44,45 mm selon le standard EIA-310-D permettant le repérage et le positionnement vertical des équipements informatiques dans une baie de type haute densité des centres de données, des salles réseau et des armoires de câblage) ;
- coût élevé des cartes offrant une configuration avec de nombreuses mémoires ;
- refroidissement nécessitant une orientation des barrettes mémoires qui doit être compatible avec l'écoulement de l'air nécessaire pour refroidir l'ensemble du boîtier.

Dans l'art antérieur, les modules mémoires de type FBD sont disposés sur la carte principale contenant le processeur. Un inconvénient de ce type d'agencement est que la surface d'occupation de la carte processeur par les FB-DIMM est très importante. De plus, la compacité n'est pas optimisée puisque le volume généralement disponible au-dessus de la carte principale n'est pas exploité. Il faut également noter que, quel que soit le nombre de barrettes mémoires installées, le coût de la carte principale (surface de circuit imprimé + connecteurs FBD) est celui d'une configuration à 8 modules Dimms par canal.

Par ailleurs, les canaux étant utilisés par paires, le simple fait de répartir en deux les mémoires par utilisation de cartes secondaires (cartes filles), disposées horizontalement ou verticalement, ne permet pas d'offrir à la fois une compacité et une accessibilité des modules mémoires. Un inconvénient supplémentaire de ce type de dispositif est son faible caractère évolutif si l'on veut ajouter de la capacité mémoire.

Le document WO-A-2005/008464 décrit un agencement de carte principale à au moins un processeur, permettant de connecter au moins une carte mémoire du type à série de modules mémoire à ladite carte principale, la carte principale étant dotée d'au moins une paire de canaux reliée au processeur et chaque canal d'une paire étant relié à un connecteur de liaison externe de type Fully Buffered DIMM.

La présente invention a pour objet de pallier un ou plusieurs des inconvénients de l'art antérieur, en proposant un agencement de carte mère permettant d'améliorer la façon d'implanter des cartes mémoires FBD.

A cet effet, l'invention concerne un agencement de carte principale tel que défini dans la revendication indépendante 1.

Selon une autre particularité, le connecteur de liaison externe est prévu pour être associé à une interface de connexion assurant la liaison avec une carte mémoire.

Selon une autre particularité, l'agencement comporte une interface de connexion insérée dans ledit connecteur, l'interface incluant :
- deux fiches de type FBD compatibles avec ledit connecteur de liaison externe, munies chacune de deux séries de plages de contact électrique, une première de ces fiches constituant un moyen de liaison adapté pour être relié à deux canaux de sortie de la carte principale et une seconde de ces fiches constituant un moyen de liaison adapté pour être relié à deux canaux d'entrée d'une carte mémoire du type à série de modules mémoire FBD ; et
- des liaisons internes respectives pour relier la première fiche à la seconde fiche dans ladite interface.

Selon une autre particularité, l'agencement comporte des connecteurs de type FBD prévus pour connecter des modules mémoire FBD à la carte principale, les connecteurs de type FBD étant raccordés en série entre le processeur de la carte principale et le connecteur de liaison externe, le raccordement étant effectué pour chaque série par des liaisons simples d'un des canaux.

Un autre objet de l'invention est de proposer une carte mémoire permettant d'équiper une carte principale, en palliant un ou plusieurs des inconvénients de l'art antérieur.

A cet effet, l'invention concerne une carte mémoire telle que définie dans la revendication indépendante 5.

Selon une autre particularité, la carte mémoire comprend deux faces opposées dont l'une supporte des connecteurs de type FBD pour connecter des module mémoire FBD et l'autre supporte le connecteur du module de liaison, le module de liaison comportant des éléments conducteurs pour raccorder les canaux de la carte mémoire au connecteur du module de liaison.

Selon une autre particularité, chaque canal de type FBD est relié à des connecteurs de type FBD par un chaînage en guirlande, chacun des canaux ayant une extrémité reliée audit module de liaison.

Selon une autre particularité, le connecteur du module de liaison permet d'insérer une interface de connexion incluant :
- deux fiches de type FBD compatibles avec ledit connecteur du module de liaison, munies chacune de deux séries de plages de contact électrique, une première de ces fiches constituant un moyen de liaison adapté pour être relié à deux canaux de sortie d'une carte principale et une seconde de ces fiches constituant un moyen de liaison adapté pour être relié à deux canaux d'entrée de la carte mémoire ; et
- des liaisons internes respectives pour relier la première fiche à la seconde fiche dans ladite interface.

Un autre objet de l'invention est de proposer une interface de connexion permettant de relier une carte principale à une carte mémoire qui est adapté aux contraintes des systèmes de mémorisation avec canaux constitués par paire, le mode de connexion visant à faciliter la constitution d'une configuration mémoire évolutive, par accroissement progressif et simultané des deux canaux.

A cet effet, l'invention concerne une interface de connexion telle que définie dans la revendication indépendante 9.

Ainsi, l'invention propose avantageusement d'utiliser un agencement particulier avec des connecteurs FB-Dimm appariés à l'aide d'une interface de connexion, un premier connecteur étant utilisé comme double entrée en liaison avec une carte principale et un second connecteur étant utilisé comme double sortie en liaison avec une carte mémoire. Ce type d'interface de connexion permet d'ajouter facilement une ou plusieurs cartes filles optionnelles à une carte mère.

Un objectif supplémentaire de l'invention est de proposer une interface de connexion permettant un gain de compacité tout en permettant une bonne accessibilité des modules mémoires.

A cet effet, l'interface de connexion comporte au moins un corps adaptateur intermédiaire solidaire de la première fiche et de la seconde fiche et s'étendant sur une surface suffisamment grande pour permettre de supporter la carte mémoire et maintenir cette dernière espacée par rapport à la carte principale, tout en étant adapté aux longueurs des liaisons internes qui relient la première fiche à la seconde fiche.

Selon une autre particularité, le corps adaptateur intermédiaire est une carte rallonge d'une carte principale et les liaisons internes sont des pistes conductrices.

Selon une autre particularité, les deux fiches sont identiques et réparties de part et d'autre d'un plan médian de l'interface de connexion.

Selon une autre particularité, les deux fiches sont coplanaires et orientées en sens opposé pour permettre la connexion de cartes mémoires disposées parallèlement au plan médian.

Selon une autre particularité, le corps adaptateur intermédiaire inclut des lignes conductrices reliant les deux fiches.

Selon une autre particularité, le corps adaptateur intermédiaire est rendu solidaire d'une carte principale.

Selon une autre particularité, le corps adaptateur intermédiaire est rendu solidaire d'une carte mémoire du type à série de modules mémoire FBD répartis suivant au moins deux canaux.

L'invention, avec ses caractéristiques et avantages, ressortira plus clairement à la lecture de la description faite en référence aux dessins annexés dans lesquels:
- la figure 1 représente une vue schématique du raccordement entre une carte mère et une carte mémoire réalisé à l'aide d'un dispositif de connexion selon l'invention,
- les figures 2A et 2B montrent respectivement une vue en perspective et une vue en coupe d'une liaison entre une carte principale et une carte mémoire réalisée par un dispositif de connexion selon l'invention,
- les figures 3A et 3B montrent respectivement une vue en perspective et une vue en coupe des liaisons entre une carte principale et deux cartes mémoire réalisées par des dispositifs de connexion selon l'invention,
- les figures 4 et 5 représentent respectivement une vue en coupe d'une liaison entre une carte principale et une carte mémoire réalisée par un dispositif de connexion selon l'invention,
- les figures 6A et 6B montrent respectivement une vue de côté et une vue de dessus d'une carte mère intégrant selon l'art connu l'ensemble des modules mémoire,
- les figures 7A, 7B et 7C représentent des possibilités respectives de connexion entre une carte mère et une ou plusieurs cartes filles, ces possibilités présentant toutes des inconvénients qui seraient évités si le type de connexion selon l'invention était utilisé ;
- la figure 8 représente le mode de connexion de type guirlande réalisé entre les modules mémoires à l'aide de connexions simples selon l'enseignement de l'invention (par opposition aux doubles connexions de l'art antérieur).

L'invention propose une interface de connexion adaptée pour connecter une ou plusieurs cartes mémoires (3, 31, 32) d'entrée-sortie multiligne en parallèle dont les modules mémoire (2) respectifs doivent être connectés à l'aide d'un bus multiligne en « daisy chain » (topologie en bus), sur chaque canal FB-DIMM (40, 41). De façon connue, il est possible de mettre jusqu'à huit modules mémoire DIMM sur un canal, chaque module (2) se présentant par exemple sous la forme de barrette mémoire.

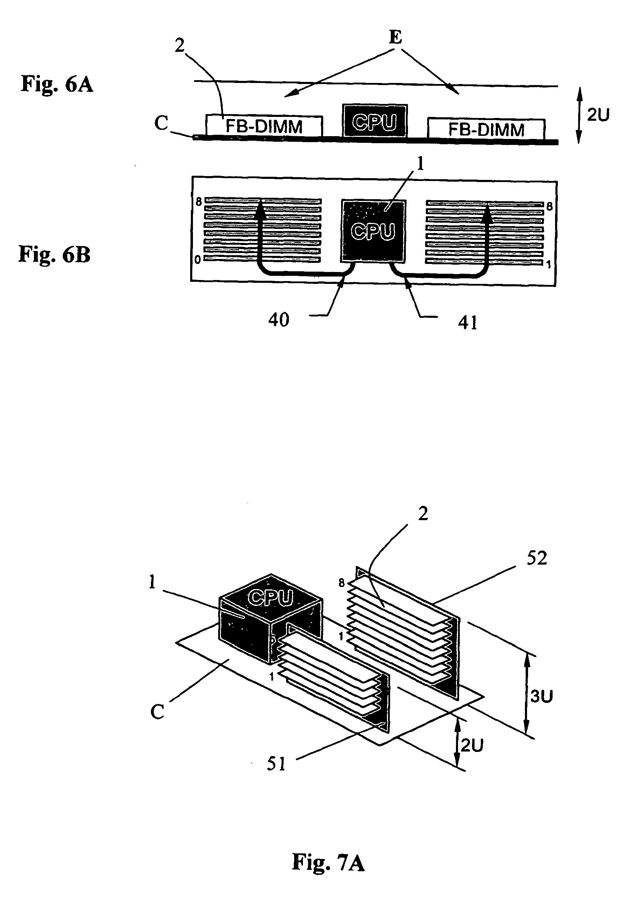

Les inventeurs ont constaté qu'il existait un besoin de délocaliser les modules mémoire (2) de la carte principale (C), notamment pour minimiser la surface d'occupation de la carte (C) qui inclut en général déjà un processeur (1), une unité de traitement de type CPU ou analogue, communiquant par deux canaux (40, 41) ou plusieurs paires de canaux. En effet comme représenté aux figures 6A et 6B, le coût de la carte mère ou carte principale dotée de ces seize modules mémoire (2) est élevé alors que la configuration souhaitée peut nécessiter un nombre plus restreint de modules mémoire (2). Il serait donc préférable de fournir un supplément de modules mémoires (2) à travers des cartes filles. Or il n'existe pas de solutions connues avec des mémoires FB-DIMMs sur cartes filles.

La personne du domaine cherchant à améliorer la répartition des modules (2) pourrait certes être amenée à implanter des cartes filles (51, 52) sur la carte principale (C), en insérant une carte fille verticale (51, 52) par canal, comme illustré à la figure 7A. Pour un boîtier de hauteur de l'ordre de 9 cm (-2U), la carte (C) comporte jusqu'à 5 mémoires, ou 8 pour un boîtier 3U (133,35 mm). Toutefois, la personne du métier n'est pas incitée à se tourner vers ce genre de solution, d'une part en raison du manque de compacité (il faut prévoir un espace inoccupé entre les cartes filles pour pouvoir accéder aux FB-DIMMs) et d'autre part en raison de la faible adaptabilité lorsqu'une pluralité de canaux est prévue sur la carte principale. Il faudra alors utiliser autant de cartes mémoires (51, 52) qu'il y a de canal FB-DIMM, même si chaque carte (51, 52) ne comporte qu'une barrette. Même en envisageant d'autres dispositions des cartes filles, on comprend que le problème consistant à réduire l'occupation de la carte principale (C) de manière satisfaisante reste jusqu'à présent non résolu.

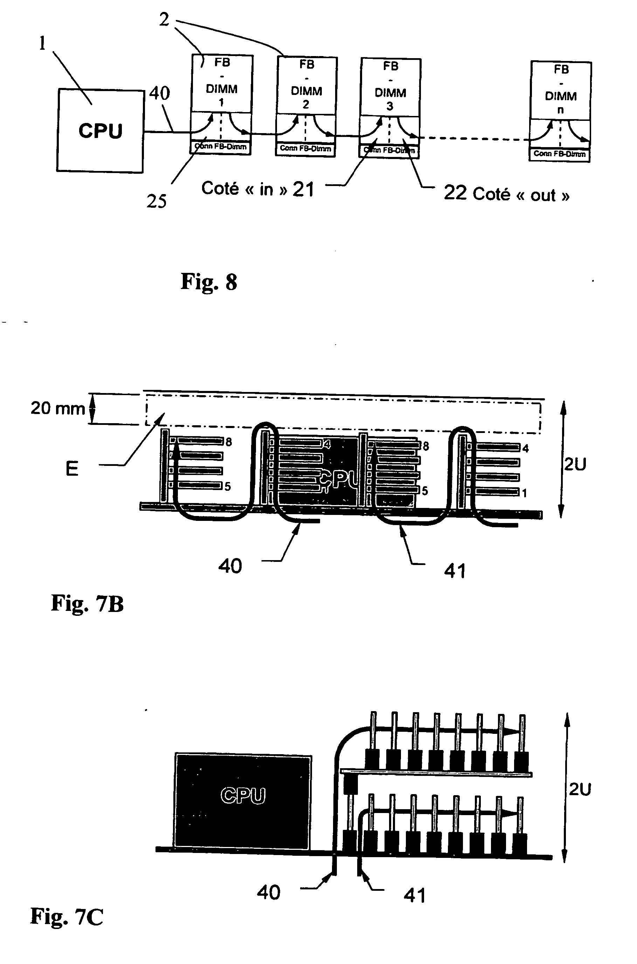

Les exemples complémentaires d'agencements représentés aux figures 7B et 7C, correspondent à des dispositions pouvant être imaginées par la personne du métier par adaptation de l'état de la technique connu. Dans l'exemple de la figure 7B avec deux cartes filles ajoutées par canal, pour chaque canal FBD, les quatre premières barrettes et les quatre dernières sont sur deux cartes filles (les cartes contenant les barrettes 5 à 8 sont optionnelles). Un inconvénient de ce type d'adjonction de cartes filles est la mauvaise occupation de la carte principale (C) : pour les deux canaux (qui vont de paire) il faut quatre cartes filles plus trois intervalles pour accéder à tous les connecteurs et modules mémoire de type FBD. De plus, la carte fille qui comporte 4 barrettes (à droite sur la figure 7B) doit avoir deux fois plus de couches logiques pour permettre au canal FBD d'aller de la barrette 4 à la barrette 5. De plus si on veut avoir des cartes mémoires identiques, il y a la moitié des couches logiques qui ne servent à rien sur la carte mémoire comportant les barrettes 5 à 8. Enfin, il faut également relever l'espace (E) inutilisé au-dessus des cartes mémoires. Même dans un tiroir de hauteur inférieur à 10 mm (par exemple 2U), il y a un espace inutilisé (E) non négligeable au dessus des cartes mémoires.

Dans l'exemple de la figure 7C, les mémoires du premier canal (41) sont sur la carte CPU, et celles du deuxième canal (40) sur une carte fille placée au-dessus. Avec cet agencement de la carte fille en « mezzanine », les modules FB-Dimms du premier canal (41) sont inaccessibles car recouvertes par la carte fille superposée. En outre, il faut obligatoirement avoir la carte mémoire fille même si en pratique il n'y a qu'un module mémoire FBD sur chaque canal (40, 41), les canaux étant appariés.

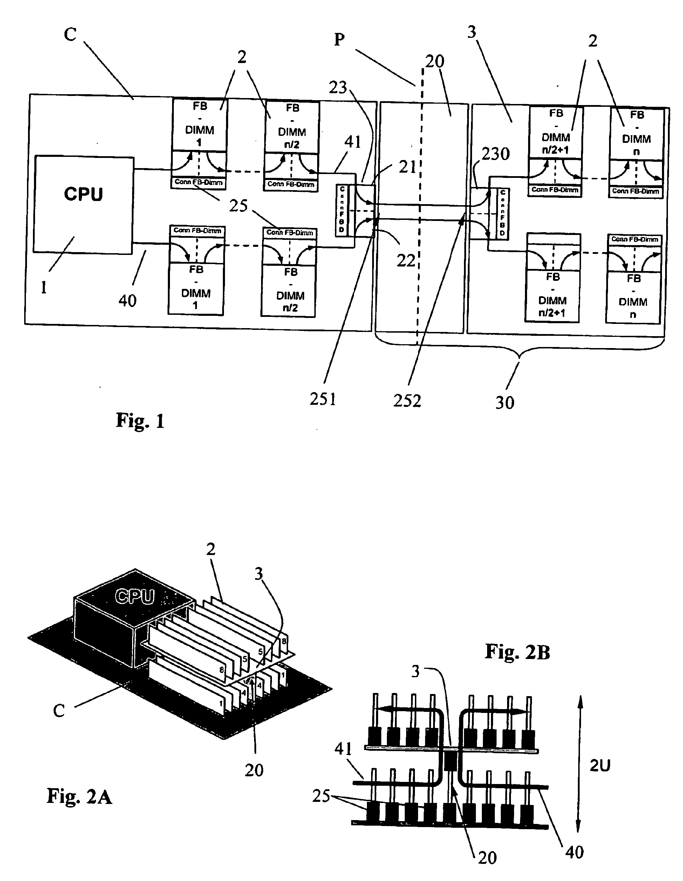

En référence à la figure 1, l'interface de connexion selon l'invention est particulièrement adaptée pour établir des liaisons entre une carte principale (C) et une carte mémoire (3, 31, 32) au sein d'un boîtier de dimensions restreintes. Du fait que la carte mémoire (3, 31, 32) doit être du type à série de modules mémoire (2), comprenant avantageusement deux séries de ces modules (2), l'interface est avantageusement dotée de deux fiches (251, 252) de connexion de type FBD munies chacune de deux séries distinctes de plages de contact électrique. Cette interface correspond au standard FBD, une première de ces fiches (251) constituant un moyen de liaison adapté pour relier deux canaux de sortie (40, 41) de la carte principale (C) et une seconde de ces fiches (252) constituant un moyen de liaison adapté pour relier deux canaux d'entrée d'une carte mémoire (3, 31, 32) du type à série de modules mémoire FBD répartis suivant au moins deux canaux. Chacune des fiches (251, 252) peut correspondre à la fiche située sur un module mémoire FBD (2). Les inventeurs ont remarquablement mis à profit le fait que le connecteur FB-Dimm prévu pour fonctionner en « daisy chain » est symétrique : des contacts sont pour moitié prévus pour recevoir le bus (coté « in »), l'autre moitié étant prévue pour router le bus vers le module ou barrette suivante (coté « out »), comme représenté notamment pour les connecteurs FBD (25) de la figure 1 et de la figure 8. Comme un tel connecteur (23, 230, 25) est symétrique, deux canaux FB-Dimms (40, 41) peuvent entrer (ou sortir) sur ses deux moitiés. Autrement dit, on peut utiliser un connecteur « in-out » comme un connecteur « in-in » ou comme un connecteur « out-out ».

Dans le mode de réalisation de la figure 1, chacune des deux séries de plages de contact électrique prévue dans les fiches (251, 252) de l'interface de connexion permet de s'adapter indifféremment à une sortie d'un canal de transmission ou à une entrée d'un canal de transmission. Comme illustré aux figures 1, 2, 3A et 3B, une première fiche (251) constitue un moyen de liaison adapté pour être relié à deux canaux d'une carte principale (C) et la seconde fiche (252) constitue un moyen de liaison adapté pour être relié à deux canaux d'une carte mémoire (3, 31, 32) du type à deux séries de modules mémoire (2). Les séries de modules FB-DIMM sont réparties suivant les canaux respectifs de la carte mémoire (3, 31, 32).

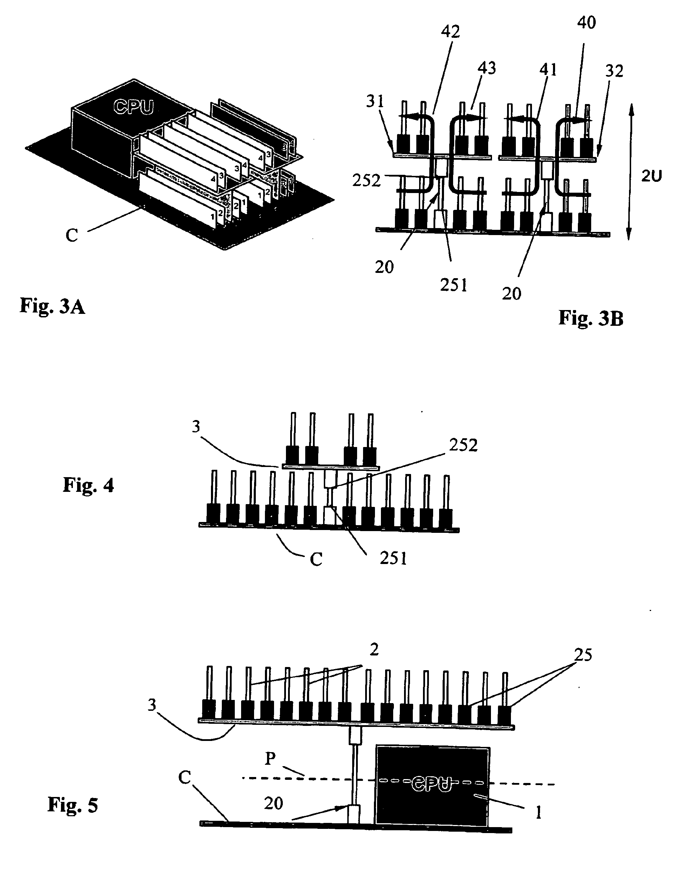

Comme montré à la figure 1, des liaisons internes respectives sont prévues dans l'interface de connexion pour connecter la première fiche (251) à la seconde fiche (252). Ces liaisons internes dont par exemple formées par des pistes conductrices. L'interface de connexion permet donc de former avec une carte mémoire (3) une parte optionnelle (30) pouvant être raccordée à la carte principale (C). Dans un mode de réalisation préféré de l'invention, l'interface de connexion comporte au moins un corps adaptateur intermédiaire (20) solidaire de la première fiche (251) et de la seconde fiche (252). Ce corps adaptateur intermédiaire (20), par exemple constitué d'un matériau rigide, s'étend sur une surface suffisamment grande pour permettre de supporter la carte mémoire (3, 31, 32) et maintenir cette dernière espacée par rapport à la carte principale (C). Comme illustré notamment aux figures 2A et 3A, le corps adaptateur intermédiaire (20) peut consister en une carte rallonge, dotée par exemple de moyens de fixation disposés sur deux bords opposés de la carte rallonge et de conducteurs constituant les lignes. Le corps adaptateur intermédiaire (20) peut être rendu solidaire de la carte principale (C) ou d'une carte mémoire (3, 31, 32). Une carte mémoire (3, 31, 32) peut par exemple être prévue avec l'interface de connexion fixée de façon inamovible sur le corps de la carte (3, 31, 32).

Les deux fiches (251, 252) sont identiques et réparties de part et d'autre d'un plan médian (P) de l'interface de connexion. Les fiches (251, 252) sont par exemple coplanaires et orientées en sens opposé pour permettre la connexion de cartes mémoires (3, 31, 32) disposées parallèlement au plan médian (P), comme illustré notamment à la figure 5.

En référence aux figures 2A et 3A, une topologie possible avec l'interface de connexion selon l'invention prévoit de répartir seize modules FBD sur deux niveaux de hauteur, de façon superposée. On utilise donc à profit l'espace (E) « perdu » dans les agencements connus tels qu'illustrés aux figures 6A et 6B. La carte principale (C) peut alors être équipée de neuf emplacements (9 barrettes sur la carte CPU représentent une surface de 102 mm x 160 mm). Un tel agencement s'étend sur une hauteur de 2U (88,9 mm). L'occupation de la carte principale (C) est alors faible : seulement la moitié des modules mémoire (2) y est implantée.

L'accessibilité des modules mémoires (2) reste aisée, s'effectuant par le dessus du boîtier. Les deux canaux (40, 41) qui fonctionnent l'un avec l'autre, doivent avoir le même nombre de modules mémoire (2). Lorsqu'on augmente la capacité mémoire, on remplit les emplacements libres dans l'ordre de 1 à 8. Lorsqu'on diminue la capacité mémoire, on retire les barrettes FB-Dimms ou modules analogues dans l'ordre inverse (continuité de la « daisy chain »). Dans l'exemple des figures 2A et 2B, intervenir sur les emplacements 1 à 4 situés au niveau de la carte principale (C) suppose qu'il n'y a pas de mémoire aux emplacements « 5 ». Dans ce cas la carte mémoire (3) peut être retirée (si elle a été installée) libérant l'accès aux modules mémoire (2) de la carte principale à processeur (1). Contrairement à un système figé, l'utilisation de l'interface de connexion selon l'invention confère un caractère amovible à la carte mémoire (3, 31, 32) équipée de ses modules mémoire (2).

La configuration la plus modeste est naturellement de moindre coût lorsque l'on ne veut pas de carte mémoire. En effet, l'unique "surcoût" provient du connecteur FB-Dimm (23) prévu pour recevoir une fiche (251) de l'interface de connexion, et de la place qu'il occupe sur la carte principale (C) : la carte rallonge avec ses fiches (51, 252) et la carte mémoire (3, 31, 32) ne sont pas livrées dans ce cas mais peuvent être acquise ultérieurement. En outre, l'interface de connexion et la carte mémoire (3) formant la partie optionnelle (30) ont un minimum de couches logiques. Il faut également remarquer que l'invention permet une disposition des modules (2) de type barrettes FB-Dimms de façon parallèle aux ailettes d'un radiateur de l'unité CPU, de sorte qu'ils sont dans le flux de ventilation.

Il est clair que le nombre de connecteurs (25) de modules mémoire (2) peut être augmenté de façon flexible grâce à l'interface de connexion selon l'invention. Ainsi, huit connecteurs supplémentaires (25) sont prévus de façon à implanter au total huit connecteurs par canal (40, 41) dans l'exemple des figures 2A et 2B. Suivant le même principe, lorsque la carte principale (C) dispose de quatre canaux (40, 41, 42, 43), huit connecteurs supplémentaires (25) sont prévus dans l'exemple des figures 3A et 3B de façon à implanter au total quatre connecteurs par canal (40, 41, 42, 43). Dans ce dernier cas, deux cartes mémoires (31, 32) sont superposées à la carte principale (C).

Comme illustré dans les figures 4 et 5, il est possible d'utiliser l'interface de connexion avec une carte principale (C) dépourvue de modules mémoire (2). Toutes les configurations où des cartes rallonges avec des fiches (251, 252) de connexion de type FDB sont placées entre deux connecteurs (23, 230) de type FB-Dimm successifs peuvent être constituées (pas seulement à la moitié de la « daisy chain »).

Il doit être compris que l'agencement de carte principale obtenu selon l'invention est modulable, cet agencement permettant de connecter une ou plusieurs cartes mémoires (3, 31, 32) du type à deux séries de modules mémoire (2). Comme illustré à la figure 1, la carte principale dotée d'au moins une paire de canaux FBD reliée au processeur (1) comporte avantageusement un ou plusieurs connecteurs de liaison externe (23) de type FBD prévu pour assurer une liaison entre la carte principale (C) et une carte fille. Ce connecteur (23) dispose de deux moitiés reliées chacune à un canal FBD distinct.

Dans l'exemple des figures 1 à 4, la carte principale (C) comporte des connecteurs de type FBD (25) prévus pour connecter des modules mémoire de type FBD (2). Ces connecteurs FBD (25) sont raccordés en série entre le processeur (1) de la carte principale (C) et le connecteur de liaison externe (23), le raccordement étant effectué pour chaque série par des liaisons simples d'un des canaux (40, 41). Autrement dit, chaque connecteur FBD (25) est interconnecté entre deux portions d'un même canal (40, 41). Chaque canal desservant une première série de connecteur FBD (25) débouche avec un autre canal distinct apparié qui dessert une seconde série de connecteur FBD (25) dans les moitiés respectives d'un connecteur de liaison externe (23). Chaque moitié du connecteur de liaison externe (23) comporte une série de plages de contact électrique reliée à un canal de la carte principale (C). Une série de plages de contact électrique est destinée à entrer en contact avec une série de plages de contact électrique correspondante disposée sur la fiche (251) de connexion de type FBD de l'interface servant à relier la carte principale (C) à une carte fille.

On comprend que le connecteur (23) de liaison externe est particulier puisqu'il est relié à deux canaux (40, 41) distincts de la carte mère, contrairement aux autres connecteurs (25) servant à connecter les modules mémoire (2). Ainsi, ce connecteur (23) de liaison externe permet d'associer la carte principale (C) à une interface de connexion assurant la liaison avec une carte mémoire (3, 31, 32). L'interface de connexion est insérée dans ledit connecteur (23) de liaison externe, par un premier bord, un bord opposé étant inséré dans un connecteur spécifique (230) prévu sur la carte fille à relier à la carte principale (C). Le connecteur spécifique (230) de la carte mémoire (3, 31, 32) est relié à deux canaux respectivement équipés d'un module mémoire ou d'une série de modules mémoire (2).

Comme illustré aux figures 1 à 5, la carte mémoire (3, 31, 32) qui peut équiper la carte principale (C) dispose de canaux de la carte mémoire reliés chacun à un module de liaison avec une autre carte, en l'occurrence avec la carte principale (C). Ce module de liaison reçoit en tout deux canaux distincts de type FBD et comprend le connecteur (230) de type FBD qui est spécifiquement relié aux deux canaux. Le connecteur spécifique (230) comporte deux séries distinctes de plages de contact électrique reliées respectivement aux deux canaux appariés de la carte mémoire (3, 31, 32). Comme représenté aux figures 2B, 3B, 4 et 5, la carte mémoire (3, 31, 32) comprend deux faces opposées dont l'une supporte des connecteurs (25) de type FBD pour connecter des modules mémoire FBD (2) tandis que l'autre face supporte le connecteur (230) du module de liaison. Ce connecteur spécifique (230) est donc orienté de façon opposée par rapport aux autres connecteurs (25) et permet ainsi de recevoir une interface de connexion de type carte rallonge d'une carte principale (C). Le module de liaison de la carte mémoire (3, 31, 32) dispose d'éléments conducteurs permettant de raccorder les canaux de la carte (3, 31, 32) au connecteur spécifique (230). On comprend que dans la carte mémoire (3, 31, 32), chaque canal de type FBD est aux connecteurs (25) de type FBD par un chaînage en guirlande, chacun des canaux ayant une extrémité reliée audit module de liaison.

Un des avantages de l'invention est de pouvoir mettre les modules mémoire (2) sur des cartes filles de façon à optimiser la surface de carte principale (carte CPU par exemple) tout en permettant d'agencer de façon compacte les cartes filles. L'intérêt d'utiliser des connecteurs (25, 23, 230) de type standard FBD et une interface de connexion à fiches de type FBD plutôt qu'un connecteur spécifique est lié à la standardisation du connecteur FB-Dimm, au grand nombre d'exemplaires qui en seront produits -et par plusieurs fournisseurs concurrents- et donc à des prix très compétitifs.

Il doit être évident pour les personnes versées dans l'art que la présente invention permet des modes de réalisation sous de nombreuses autres formes spécifiques sans l'éloigner du domaine d'application de l'invention comme revendiqué, l'invention ne devant pas être limitée aux détails donnés ci-dessus.

## Revendications

1. Agencement de carte principale (C) à au moins un processeur (1), permettant de connecter au moins une carte mémoire (3, 31, 32) du type à série de modules mémoire (2) à ladite carte principale (C), la carte principale (C) étant dotée d'au moins une paire de canaux (40, 41) reliée au processeur **caractérisée en ce que** (1), chaque canal forme une seule ligne logique de type Fully Buffered Dimm permettant de relier entre eux une série de modules mémoire selon une topologie de bus en guirlande et que chaque canal (40, 41) d'une paire est relié à un connecteur de liaison externe (23) de type Fully Buffered Dimm, le connecteur de liaison externe (23) comportant deux séries distinctes (21, 22) de plages de contact électrique reliées respectivement aux deux canaux (40, 41) d'une paire prévus sur la carte principale (C).

2. Agencement selon la revendication 1, dans lequel le connecteur de liaison externe (23) est prévu pour être associé à une interface de connexion assurant la liaison avec une carte mémoire (3, 31, 32).

3. Agencement selon la revendication 1 ou 2, comportant une interface de connexion insérée dans ledit connecteur de liaison externe (23), l'interface incluant :
- deux fiches (251, 252) de type Fully Buffered Dimm compatibles avec ledit connecteur de liaison externe (23), munies chacune de deux séries de plages de contact électrique, une première de ces fiches (251) constituant un moyen de liaison adapté pour être relié à deux canaux de sortie (40, 41) de la carte principale (C) et une seconde de ces fiches (252) constituant un moyen de liaison adapté pour être relié à deux canaux d'entrée d'une carte mémoire (3, 31, 32) du type à série de modules mémoire Fully Buffered Dimm ; et
- des liaisons internes respectives pour relier la première fiche (251) à la seconde fiche (252) dans ladite interface.

4. Agencement selon une des revendications 1 à 3, comportant des connecteurs de type Fully Buffered Dimm (25) prévus pour connecter des modules mémoire de type Fully Buffered Dimm (2) à la carte principale (C), les connecteurs Fully Buffered Dimm (25) étant raccordés en série entre le processeur (1) de la carte principale et le connecteur de liaison externe (23), le raccordement étant effectué pour chaque série par des liaisons simples d'un des canaux (40, 41).

5. Carte mémoire destinée à équiper une carte principale dotée d'au moins une paire de canaux (40, 41) reliée à un processeur (1), du type à deux séries de modules mémoire (2) Fully Buffered Dimm reliés à des canaux respectifs de type Fully Buffered Dimm à l'aide de connecteurs (25) de type Fully Buffered Dimm permettant de connecter des modules mémoire Fully Buffered Dimm (2), **caractérisé en ce que** chaque canal forme une seule ligne logique de type Fully Buffered Dimm permettant de relier entre eux une série de modules mémoire selon une topologie de bus en guirlande, et que chaque canal de la carte mémoire (3, 31, 32) est relié à un module de liaison de ladite carte mémoire avec une autre carte, le module de liaison recevant en tout deux canaux distincts de type Fully Buffered Dimm et comprenant un connecteur (230) de type Fully Buffered Dimm comportant deux séries distinctes de plages de contact électrique reliées respectivement à deux canaux appariés de la carte mémoire (3, 31, 32), le connecteur (230) du module de liaison étant apte à être associé à une interface de connexion assurant la liaison avec la carte principale (C).

6. Carte mémoire selon la revendication 5, comprenant deux faces opposées dont l'une supporte des connecteurs (25) de type Fully Buffered Dimm pour connecter des modules mémoire Fully Buffered Dimm (2) et l'autre supporte le connecteur (230) du module de liaison, le module de liaison comportant des éléments conducteurs pour raccorder les canaux de la carte mémoire (3, 31, 32) au connecteur (230) du module de liaison.

7. Carte mémoire selon la revendication 5, dans laquelle chaque canal de type Fully Buffered Dimm est relié à des connecteurs (25) de type Fully Buffered Dimm par un chaînage en guirlande, chacun des canaux ayant une extrémité reliée audit module de liaison.

8. Carte mémoire selon une des revendications 5 à 7, comportant insérée dans le connecteur (230) du module de liaison une interface de connexion incluant :
- deux fiches (251, 252) de type Fully Buffered Dimm compatibles avec ledit connecteur (230) du module de liaison, munies chacune de deux séries de plages de contact électrique, une première de ces fiches (251) constituant un moyen de liaison adapté pour être relié à deux canaux de sortie (40, 41) d'une carte principale (C) et une seconde de ces fiches (252) constituant un moyen de liaison adapté pour être relié à deux canaux d'entrée de la carte mémoire (3, 31, 32) ; et
- des liaisons internes respectives pour relier la première fiche (251) à la seconde fiche (252) dans ladite interface.

9. Interface de connexion, destinée à un boîtier informatique, permettant de connecter une carte principale (C) comportant au moins un processeur à une carte mémoire (3, 31, 32) du type à série de modules mémoire (2), **caractérisé en ce qu'**elle comporte :
- deux fiches (251, 252) de connexion de type Fully Buffered Dimm munies chacune de deux séries de plages de contact électrique, chacune des fiches étant insérable dans un connecteur à deux voies de type Fully Buffered Dimm, une première de ces fiches (251) constituant un moyen de liaison adapté pour être relié à deux canaux de sortie (40, 41) de la carte principale (C) et une seconde de ces fiches (252) constituant un moyen de liaison adapté pour être relié à deux canaux d'entrée d'une carte mémoire (3, 31, 32) du type à série de modules mémoire Fully Buffered Dimm répartis suivant au moins deux canaux, chaque canal formant une seule ligne logique de type Fully Buffered Dimm permettant de relier entre eux une série de modules mémoire selon une topologie de bus en guirlande; et
- des liaisons internes respectives pour connecter la première fiche (251) à la seconde fiche (252) dans ladite interface.

10. Interface selon la revendication 9, comportant au moins un corps adaptateur intermédiaire (20) solidaire de la première fiche (251) et de la seconde fiche (252) et s'étendant sur une surface suffisamment grande pour permettre de supporter la carte mémoire (3, 31, 32) et maintenir cette dernière espacée par rapport à la carte principale (C), tout en étant adapté aux longueurs des liaisons internes qui relient la première fiche (251) à la seconde fiche (252).

11. Interface de connexion selon la revendication 10, dans laquelle le corps adaptateur intermédiaire (20) est une carte rallonge d'une carte principale (C) et les liaisons internes sont des pistes conductrices.

12. Interface selon une des revendications 9 à 11, dans laquelle les deux fiches (251, 252) sont identiques et réparties de part et d'autre d'un plan médian (P) de l'interface de connexion.

13. Interface selon une des revendications 9 à 12, dans laquelle les deux fiches (251, 252) sont coplanaires et orientées en sens opposé pour permettre la connexion de cartes mémoires (3, 31, 32) disposées parallèlement au plan médian (P).

14. Interface selon une des revendications 10 à 13, dans laquelle le corps adaptateur intermédiaire (20) inclut des lignes conductrices reliant les deux fiches (251, 252).

15. Interface selon une des revendications 10 à 14, dans laquelle le corps adaptateur intermédiaire (20) est rendu solidaire d'une carte principale (C).

16. Interface selon une des revendications 10 à 14, dans laquelle le corps adaptateur intermédiaire (20) est rendu solidaire d'une carte mémoire (3, 31, 32) du type à série de modules mémoire Fully Buffered Dimm répartis suivant au moins deux canaux.

## Patentansprüche

1. Anordnung einer Hauptkarte (C) an mindestens einem Prozessor (1), mit der es möglich ist, mindestens eine Speicherkarte (3, 31, 32) der Art mit einer Reihe von Speichermodulen (2) mit der Hauptkarte (C) zu verbinden, wobei die Hauptkarte (C) mit mindestens zwei Kanälen (40, 41) ausgestattet ist, die mit dem Prozessor (1) verbunden sind, **dadurch gekennzeichnet, dass** jeder Kanal eine einzige logische Leitung der Art Fully Buffered Dimm bildet, mit der es möglich ist, eine Reihe von Speichermodulen gemäß einer Bustopologie mit Serienanordnung miteinander zu verbinden, und jeder Kanal (40, 41) eines Paares mit einem Fully-Buffered-Dimm-Außenanschlusssteckverbinder (23) verbunden ist, wobei der Außenanschlusssteckverbinder (23) zwei getrennte Reihen (21, 22) von elektrischen Kontaktbereichen aufweist, die jeweils mit den beiden auf der Hauptkarte (C) vorgesehenen Kanälen (40, 41) eines Paares verbunden sind.

2. Anordnung nach Anspruch 1, bei der der Außenanschlusssteckverbinder (23) dazu vorgesehen ist, einer Verbindungsschnittstelle zugeordnet zu werden, die den Anschluss an eine Speicherkarte (3, 31, 32) gewährleistet.

3. Anordnung nach Anspruch 1 oder 2, mit einer in den Außenanschlusssteckverbinder (23) eingesetzten Verbindungsschnittstelle, wobei die Schnittstelle Folgendes aufweist:
- zwei Fully-Buffered-Dimm-Stecker (251, 252), die mit dem Außenanschlusssteckverbinder (23) kompatibel und jeweils mit zwei Reihen von elektrischen Kontaktbereichen versehen sind, wobei ein erster dieser Stecker (251) ein Anschlussmittel bildet, das dazu geeignet ist, mit zwei Ausgangskanälen (40, 41) der Hauptkarte (C) verbunden zu werden, und ein zweiter dieser Stecker (252) ein Anschlussmittel bildet, das dazu geeignet ist, mit zwei Eingangskanälen einer Speicherkarte (3, 31, 32) der Art mit einer Reihe von Fully-Buffered-Dimm-Speichermodulen verbunden zu werden; und
- entsprechende Innenanschlüsse zum Verbinden des ersten Steckers (251) mit dem zweiten Stecker (252) in der Schnittstelle.

4. Anordnung nach einem der Ansprüche 1 bis 3, mit Fully-Buffered-Dimm-Steckverbindern (25), die dazu vorgesehen sind, Fully-Buffered-Dimm-Speichermodule (2) mit der Hauptkarte (C) zu verbinden, wobei die Fully-Buffered-Dimm-Steckverbinder (25) zwischen dem Prozessor (1) der Hauptkarte und dem Außenanschlusssteckverbinder (23) in Reihe geschaltet sind und für jede Reihe die Verbindung mit einfachen Anschlüssen eines der Kanäle (40, 41) erfolgt.

5. Speicherkarte, mit der eine Hauptkarte versehen werden soll, die mit mindestens zwei Kanälen (40, 41) ausgestattet ist, die mit einem Prozessor (1) der Art mit zwei Reihen von Fully-Buffered-Dimm-Speichermodulen (2) verbunden sind, die über Fully-Buffered-Dimm-Steckverbinder (25), die das Verbinden von Fully-Buffered-Dimm-Speichermodulen (2) ermöglichen, mit entsprechenden Fully-Buffered-Dimm-Kanälen verbunden sind, **dadurch gekennzeichnet, dass** jeder Kanal eine einzige logische Leitung der Art Fully Buffered Dimm bildet, mit der es möglich ist, eine Reihe von Speichermodulen gemäß einer Bustopologie mit Serienanordnung miteinander zu verbinden, und jeder Kanal der Speicherkarte (3, 31, 32) mit einem Modul für den Anschluss der Speicherkarte mit einer weiteren Karte verbunden ist, wobei das Anschlussmodul insgesamt zwei getrennte Fully-Buffered-Dimm-Kanäle aufnimmt und einen Fully-Buffered-Dimm-Steckverbinder (230) mit zwei getrennten Reihen von elektrischen Kontaktbereichen aufweist, welche jeweils mit zwei gepaarten Kanälen der Speicherkarte (3, 31, 32) verbunden sind, wobei der Steckverbinder (230) des Anschlussmoduls einer Verbindungsschnittstelle zugeordnet werden kann, die den Anschluss an die Hauptkarte (C) gewährleistet.

6. Speicherkarte nach Anspruch 5, mit zwei gegenüberliegenden Flächen, von denen eine Fully-Buffered-Dimm-Steckverbinder (25) zum Verbinden von Fully-Buffered-Dimm-Speichermodulen (2) und die andere den Steckverbinder (230) des Anschlussmoduls trägt, wobei das Anschlussmodul leitfähige Elemente zum Verbinden der Kanäle der Speicherkarte (3, 31, 32) mit dem Steckverbinder (230) des Anschlussmoduls aufweist.

7. Speicherkarte nach Anspruch 5, bei der jeder Fully-Buffered-Dimm-Kanal über eine Verkettung mit Serienanordnung mit Fully-Buffered-Dimm-Steckverbindern (25) verbunden ist, wobei jeder der Kanäle ein mit dem Anschlussmodul verbundenes Ende aufweist.

8. Speicherkarte nach einem der Ansprüche 5 bis 7, mit einer in den Steckverbinder (230) des Anschlussmoduls eingesetzten Verbindungsschnittstelle, die Folgendes aufweist:
- zwei Fully-Buffered-Dimm-Stecker (251, 252), die mit dem Steckverbinder (230) des Anschlussmoduls kompatibel und jeweils mit zwei Reihen von elektrischen Kontaktbereichen versehen sind, wobei ein erster dieser Stecker (251) ein Anschlussmittel bildet, das dazu geeignet ist, mit zwei Ausgangskanälen (40, 41) einer Hauptkarte (C) verbunden zu werden, und ein zweiter dieser Stecker (252) ein Anschlussmittel bildet, das dazu geeignet ist, mit zwei Eingangskanälen der Speicherkarte (3, 31, 32) verbunden zu werden; und
- entsprechende Innenanschlüsse zum Verbinden des ersten Steckers (251) mit dem zweiten Stecker (252) in der Schnittstelle.

9. Verbindungsschnittstelle, die für ein Computergehäuse bestimmt ist, mit der es möglich ist, eine mindestens einen Prozessor aufweisende Hauptkarte (C) mit einer Speicherkarte (3, 31, 32) der Art mit einer Reihe von Speichermodulen (2) zu verbinden, **dadurch gekennzeichnet, dass** sie Folgendes aufweist:
- zwei Fully-Buffered-Dimm-Verbindungsstecker (251, 252), die jeweils mit zwei Reihen von elektrischen Kontaktbereichen versehen sind, wobei jeder dieser Stecker in einen Fully-Buffered-Dimm-Zweikanalsteckverbinder eingesetzt werden kann und ein erster dieser Stecker (251) ein Anschlussmittel bildet, das dazu geeignet ist, mit zwei Ausgangskanälen (40, 41) der Hauptkarte (C) verbunden zu werden, und ein zweiter dieser Stecker (252) ein Anschlussmittel bildet, das dazu geeignet ist, mit zwei Eingangskanälen einer Speicherkarte (3, 31, 32) der Art mit einer Reihe von Fully-Buffered-Dimm-Speichermodulen verbunden zu werden, die entlang mindestens zwei Kanälen verteilt sind, wobei jeder Kanal eine einzige logische Leitung der Art Fully Buffered Dimm bildet, mit der es möglich ist, eine Reihe von Speichermodulen gemäß einer Bustopologie mit Serienanordnung miteinander zu verbinden; und
- entsprechende Innenanschlüsse zum Verbinden des ersten Steckers (251) mit dem zweiten Stecker (252) in der Schnittstelle.

10. Schnittstelle nach Anspruch 9, mit mindestens einem Anpassungszwischenkörper (20), der mit dem ersten Stecker (251) und dem zweiten Stecker (252) fest verbunden ist und sich auf einer Fläche erstreckt, die ausreichend groß ist, so dass die Speicherkarte (3, 31, 32) getragen und diese in einem Abstand zur Hauptkarte (C) gehalten werden kann, und der dabei an die Längen der Innenanschlüsse angepasst ist, die den ersten Stecker (251) mit dem zweiten Stecker (252) verbinden.

11. Verbindungsschnittstelle nach Anspruch 10, bei der der Anpassungszwischenkörper (20) eine Verlängerungskarte einer Hauptkarte (C) ist und die Innenanschlüsse Leiterbahnen sind.

12. Schnittstelle nach einem der Ansprüche 9 bis 11, bei der die beiden Stecker (251, 252) identisch und auf der einen und auf der anderen Seite einer Mittelebene (P) der Verbindungsschnittstelle verteilt sind.

13. Schnittstelle nach einem der Ansprüche 9 bis 12, bei der die beiden Stecker (251, 252) koplanar und entgegengesetzt ausgerichtet sind, um das Verbinden von parallel zur Mittelebene (P) angeordneten Speicherkarten (3, 31, 32) zu ermöglichen.

14. Schnittstelle nach einem der Ansprüche 10 bis 13, bei der der Anpassungszwischenkörper (20) leitfähige Leitungen aufweist, die die beiden Stecker (251, 252) verbinden.

15. Schnittstelle nach einem der Ansprüche 10 bis 14, bei der der Anpassungszwischenkörper (20) mit einer Hauptkarte (C) fest verbunden wird.

16. Schnittstelle nach einem der Ansprüche 10 bis 14, bei der der Anpassungszwischenkörper (20) mit einer Speicherkarte (3, 31, 32) der Art mit einer Reihe von Fully-Buffered-Dimm-Speichermodulen fest verbunden wird, die entlang mindestens zwei Kanälen verteilt sind.

## Claims

1. Arrangement for a main board (C) having at least one processor (1), allowing the connection of at least one memory card (3, 31, 32) of the type having a series of memory modules (2) to said main board (C), the main board (C) being provided with at least one pair of channels (40, 41) connected to the processor (1), **characterised in that** each channel forms a single logic line of Fully Buffered DIMM type allowing the pairwise connection of a series of memory modules with a daisy-chain bus topology and **in that** each channel (40, 41) of a pair is connected to an external linking connector (23) of Fully Buffered DIMM type, the external linking connector (23) having two distinct series (21, 22) of electrical contact pins respectively connected to the two channels (40, 41) of a pair provided on the main board (C).

2. Arrangement according to claim 1, in which the external linking connector (23) is designed to be associated with a connection interface providing the connection to a memory card (3, 31, 32).

3. Arrangement according to claim 1 or 2, having a connection interface inserted in said external linking connector (23), the interface including:
- two plugs (251, 252) of Fully Buffered DIMM type compatible with said external linking connector (23), each being provided with two series of electrical contact pins, a first of these plugs (251) constituting a connection means adapted to be connected to two output channels (40, 41) of the main board (C) and a second of these plugs (252) constituting a connection means adapted to be connected to two input channels of a memory card (3, 31, 32) of the type having a series of Fully Buffered DIMM memory modules; and
- respective internal links for connecting the first plug (251) to the second plug (252) in said interface.

4. Arrangement according to one of claims 1 to 3, having connectors of Fully Buffered DIMM type (25) designed to connect memory modules of the Fully Buffered DIMM type (2) to the main board (C), the Fully Buffered DIMM connectors (25) being connected in series between the processor (1) of the main board and the external linking connector (23), the connection being effected for each series by simple links from one of the channels (40, 41).

5. Memory card designed to be fitted to a main board provided with at least one pair of channels (40, 41) connected to a processor (1), of the type having two series of Fully Buffered DIMM memory modules (2) connected to respective channels of Fully Buffered DIMM type with the aid of connectors (25) of Fully Buffered DIMM type allowing the connection of Fully Buffered DIMM memory modules (2), **characterised in that** each channel forms a single logic line of Fully Buffered DIMM type allowing the pairwise connection of a series of memory modules with a daisy-chain bus topology and **in that** each channel of the memory card (3, 31, 32) is connected to a module for linking said memory card with another card, the linking module receiving in all two distinct channels of Fully Buffered DIMM type and comprising a connector (230) of Fully Buffered DIMM type having two distinct series of electrical contact pins connected respectively to two paired channels of the memory card (3, 31, 32), the connector (230) of the linking module being capable of being associated with a connection interface providing the link with the main board (C).

6. Memory card according to claim 5, comprising two opposing faces one of which supports connectors (25) of Fully Buffered DIMM type for connection of the Fully Buffered DIMM memory modules (2) and the other of which supports the connector (230) of the linking module, the linking module having conducting elements for connecting the channels of the memory card (3, 31, 32) to the connector (230) of the linking module.

7. Memory card according to claim 5, in which each channel of Fully Buffered DIMM type is connected to connectors (25) of Fully Buffered DIMM type by a daisy-chain arrangement, each of the channels having one end connected to said linking module.

8. Memory card according to one of claims 5 to 7, having inserted in the connector (230) of the linking module a connection interface including:
- two plugs (251, 252) of Fully Buffered DIMM type compatible with said connector (230) of the linking module, each provided with two series of electrical contact pins, a first of these plugs (251) constituting a connection means adapted to be connected to two output channels (40, 41) of a main board (C) and a second of these plugs (252) constituting a connection means adapted to be connected to two input channels of the memory card (3, 31, 32); and
- respective internal links for connecting the first plug (251) to the second plug (252) in said interface.

9. Connection interface, intended for a computer unit, allowing the connection of a main board (C) having at least one processor to a memory card (3, 31, 32) of the type having a series of memory modules (2), **characterised in that** it has:
- two connecting plugs (251, 252) of Fully Buffered DIMM type each provided with two series of electrical contact pins, each of the plugs being insertable in a two-way connector of Fully Buffered DIMM type, a first of these plugs (251) constituting a connection means adapted to be connected to two output channels (40, 41) of the main board (C) and a second of these plugs (252) constituting a connection means adapted to be connected to two input channels of a memory card (3, 31, 32) of the type having a series of Fully Buffered DIMM memory modules distributed between at least two channels, each channel forming a single logic line of Fully Buffered DIMM type allowing the pairwise connection of a series of memory modules with a daisy-chain bus topology; and
- respective internal links for connecting the first plug (251) to the second plug (252) in said interface.

10. Interface according to claim 9, having at least one intermediate adapter element (20) attached to the first plug (251) and to the second plug (252) and extending over a sufficiently large surface area to provide support for the memory card (3, 31, 32) and to hold the latter spaced away from the main board (C), while being adapted to the lengths of the internal links which connect the first plug (251) to the second plug (252).

11. Connection interface according to claim 10, in which the intermediate adapter element (20) is an extension card of a main board (C) and the internal links are printed circuit tracks.

12. Interface according to one of claims 9 to 11, in which the two plugs (251, 252) are identical and distributed on either side of a median plane (P) of the connection interface.

13. Interface according to one of claims 9 to 12, in which the two plugs (251, 252) are co-planar and oriented in opposite directions to allow the connection of memory cards (3, 31, 32) disposed parallel to the median plane (P).

14. Interface according to one of claims 10 to 13, in which the intermediate adapter element (20) includes conducting lines connecting the two plugs (251, 252).

15. Interface according to one of claims 10 to 14, in which the intermediate adapter element (20) is attached to a main board (C).

16. Interface according to one of claims 10 to 14, in which the intermediate adapter element (20) is attached to a memory card (3, 31, 32) of the type having a series of Fully Buffered DIMM memory modules distributed between at least two channels.
